# EUROPÄISCHE PATENTSCHRIFT

(11) **EP 0 483 312 B1**
(45) Veröffentlichungstag und Bekanntmachung des Hinweises auf die Patenterteilung: **27.07.1994**
(21) Anmeldenummer: 91908223.0
(22) Anmeldetag: 16.05.1991
(51) Int. Cl.: C02F 3/30

(54) **VERFAHREN ZUR NITRAT- UND PHOSPHATELIMINATION BEI DER BIOLOGISCHEN REINIGUNG VON ABWASSER**
PROCESS FOR ELIMINATING NITRATES AND PHOSPHATES IN THE BIOLOGICAL PURIFICATION OF WASTE WATER
PROCEDE D'ELIMINATION DE NITRATES ET DE PHOSPHATES LORS DE L'EPURATION BIOLOGIQUE D'EAUX D'EGOUTS

(30) Priorität: 18.05.1990 CH 1691/90
(43) Veröffentlichungstag der Anmeldung: 06.05.1992
(73) Patentinhaber: UTB Buchs AG, CH-9470 Buchs (CH)
(72) Erfinder: BAIER, Urs, Dr., CH-7320 Sargans (CH); WYSS, Paul, CH-4533 Riedholz (CH)
(74) Vertreter: Riederer, Conrad A., Dr.
(86) Internationale Anmeldenummer: CH9100116
(87) Internationale Veröffentlichungsnummer: WO9117959

(56) Entgegenhaltungen:
- EP-A-87 127
- DE-A- 2 740 766
- FR-A- 2 382 405
- US-A- 4 488 968
- Abwassertechnik, Band IV, Seiten 239-240; 311-312

## Beschreibung

Die Erfindung bezieht sich auf ein Verfahren zur Nitrat- und Phosphatelimination bei der biologischen Reinigung von Abwasser in einer Abwasserreinigungsanlage, mit einer ersten Stufe, welche ein Belebungsbecken und ein Zwischenklärbecken aufweist, und einer zweiten Stufe, welche ein Belebungsbecken und ein Nachklärbecken aufweist, bei welchem Verfahren Abwasser aus der ersten Stufe einer Nachbehandlung in der zweiten Stufe unterzogen wird, der im Nachklärbecken abgesetzte Schlamm zu einem grossen Teil zurückgeleitet und zu einem kleinen Teil als Ueberschussschlamm einer Faulstufe zugeführt wird.

Die DE-A-27 40 766 beschreibt ein Verfahren zur biochemischen Reinigung von häuslichem, industriellem oder gemischtem Abwasser beim Auftreten von organischen Inhaltsstoffen, welche die unerwünschte Entwicklung von Fadenbakterien und die Bildung von Blähschlamm begünstigen. Dieses Verfahren bedient sich einer ersten, ein aerob betriebenes Belebungsbecken und gegebenenfalls ein Zwischenklärbecken enthaltenden biochemischen Stufe und einer nachgeschalteten zweiten, ein aerob betriebenes Belebungsbecken und ein Nachklärbecken enthaltenden biochemischen Stufe. Zur biochemischen Reinigung wird schlammfreies, teilgereinigtes Abwasser aus der ersten biochemischen Stufe ganz oder teilweise zur Nachbehandlung in die zweite biochemische Stufe weitergeleitet und in das Belebungsbecken der ersten biochemischen Stufe mit einem Anteil zurückgeführt, der im Vergleich zu jenem Anteil, der in die zweite Stufe geleitet wird, um so grösser ist, je stärker in der ersten biochemischen Stufe die Neigung zur Bildung von Fadenbakterien ist. Der im Zwischenklärbecken der ersten biochemischen Stufe abgesetzte Schlamm wird dem Belebungsbecken der zweiten biochemischen Stufe zugeleitet, wobei ein Teil dieses Schlamms als Ueberschussschlamm vorher noch abgezogen werden kann. Der im Nachklärbecken der zweiten biochemischen Stufe abgesetzte Schlamm wird teilweise in das Belebungsbecken der zweiten biochemischen Stufe zurückgeleitet und teilweise als Ueberschussschlamm beseitigt.

Dieses Verfahren hat den Vorteil, dass sich in den verschiedenen Stufen unterschiedliche Lebensgemeinschaften im Belebtschlamm bilden, die sich der jeweiligen Abwasserbeschaffenheit relativ gut anpassen. Diese Lebensgemeinschaften im Belebtschlamm sind gegen Belastungsschwankungen sehr resistent und ermöglichen einen verhältnismässig raschen biologischen Abbau der organischen Schadstoffe.

Beim biologischen Abbau von stickstoffhaltigen Stoffen, z.B. Eiweissstoffen, entstehen Ammoniumsalze. Diese bilden eine Gefahr für natürliche Gewässer, weil sie als Fischgift wirken oder bei eintretender Nitrifikation zu einem Sauerstoffschwund des Gewässers führen. Abwasserreinigungsverfahren sollten daher Ammoniumsalze möglichst eliminieren. Dies erfolgt beim bekannten Verfahren durch biologische Nitrifikation und anschliessende Denitrifikation, welche hauptsächlich im Klärbecken der ersten Stufe stattfindet. Zuerst werden die Ammoniumsalze durch Nitrosomonas-Bakterien in Nitrit umgewandelt, worauf dann durch Nitrobakter eine Umwandlung des Nitrits in Nitrat erfolgt. Die Nitrifikation stellt einen Oxidationsprozess dar. Um diesen Prozess zu beschleunigen, ist daher eine Belüftung für die Belebungsbecken vorgesehen. Im Gegensatz dazu stellt die Umwandlung von Nitriten und Nitraten zu elementarem Stickstoff einen Reduktionsvorgang dar, der durch fakultativ aerobe Bakterien erfolgt. Für die Denitrifikation wirkt daher die Anwesenheit von Sauerstoff störend.

Beim vorbekannten Verfahren gemäss der CH-A-547 235 wird das dem Absetzbecken der ersten Stufe entnommene, Ammoniumsalze enthaltende sauerstofffreie Abwasser im Belebungsbecken der zweiten Stufe zwecks einer möglichst weitgehenden Nitrifikation der Ammoniumsalze belüftet. Ein Teil des in dieser Weise nitrifizierten Abwassers aus dem Absetzbecken der zweiten Stufe wird dann kontinuierlich in die erste Stufe zurückzirkuliert und im Absetzbecken der ersten Stufe, wo Sauerstoffmangel herrscht, denitrifiziert. Der andere Teil des nitrifizierten Abwassers verbleibt einige Zeit im Absetzbecken der zweiten Stufe. Das die Anlage verlassende gereinigte Abwasser ist daher weitgehend denitrifiziert. Dies setzt allerdings eine entsprechend grosse Dimensionierung voraus.

Es ist bekannt, dass Phosphor eine wichtige Rolle bei der Eutrophierung von Gewässern führt. Es muss daher nicht nur der Nitratelimination, sondern auch der Phosphorelimination Beachtung geschenkt werden. Die Phosphorelimination erfolgt gewöhnlich auf chemischem Wege, indem mittels Eisen- oder Aluminiumsalzen eine Phosphatfällung vorgenommen wird. Die chemische Phosphatfällung hat jedoch den Nachteil, dass sie zu einer Aufsalzung führt. In diesem Zusammenhang kann bemerkt werden, dass Aluminiumsalze unter dem Verdacht stehen, die Ursache der gefürchteten Alzheimer-Krankheit zu sein.

Es sind bereits biologische Verfahren zur Phosphorelimination, wie z.B. in der EP-A-87 127 offenbart, bekannt geworden. Bei diesen Verfahren wird die Fähigkeit aerober Mikroorganismen zu einer vermehrten Phosphoraufnahme gezielt genutzt. Die Voraussetzung hiefür bildet ein ständiger Wechsel von anaeroben und aeroben Milieuverhältnissen. Unter anaeroben Bedingungen geben diese Bakterien Phosphat ab, um dann in der nachfolgenden aeroben Phase erhöhte Phosphatmengen zu speichern. Die Phosphorreduktion erfolgt dabei über die Phosphorfixierung in den Mikroorganismen und deren Entnahme mit dem Ueberschussschlamm. Die Phosphatrücklösung wird durch das Vorliegen von Nitrat, Nitrit und Sauerstoff negativ beeinflusst, so dass sich die Phosphatrücklösung verzögert und die Stufe dadurch entsprechend grösser dimensioniert werden muss.

Es ist daher Aufgabe der vorliegenden Erfindung, ein Verfahren zu schaffen, das eine chemische Phosphorelimination unnötig macht oder mindestens eine starke Reduktion des Fällungsmittelverbrauchs ermöglicht. Das Verfahren soll aber auch eine hohe Betriebssicherheit und Reinigungsleistung gewährleisten. Des weiteren soll das Verfahren mit einer Abwasserreinigungsanlage durchgeführt werden können, die einen geringen Land- und Raumbedarf besitzt und zum Betrieb möglichst wenig Energie benötigt.

Zur Lösung der Aufgabe ist erfindungsgemäss vorgesehen, dass beim Verfahren der eingangs erwähnten Art Belebtschlamm aus dem Zwischenklärbecken einer anaeroben Zwischenstufe zugeführt, dort während einer vorbestimmten Zeit belassen und dann zum Belebungsbecken rezirkuliert wird, und dass sowohl Abwasser als auch Schlamm aus der zweiten Stufe einer anoxischen Vorstufe zugeleitet werden, dass der Inhalt der anoxischen Vorstufe umgewälzt wird und dass das mit Schlamm vermengte Abwasser aus der anoxischen Vorstufe dem Belebungsbecken der zweiten Stufe zugeführt wird. Der Schlamm aus dem Zwischenklärbecken, welcher der anaeroben Zwischenstufe zugeführt wird, enthält praktisch keine Nitrate. Es stehen somit den Bakterien in der anaeroben Zwischenstufe kein Sauerstoff aus Nitraten und auch kein Luftsauerstoff zur Verfügung, so dass sie die zum Leben nötige Energie durch Freisetzung zellintern gespeicherter Phosphate gewinnen. Es erfolgt dadurch eine Phosphatrücklösung. Dank dieser weder durch Nitrate noch gelöstem Sauerstoff beeinträchtigten Rücklösung der Phosphate, erfolgt nach der Rezirkulation des Schlamms in das Belebungsbecken die Phosphataufnahme umso günstiger. Im Gegensatz zu herkömmlichen Verfahren wird daher die Gesamtphosphatelimination erheblich erhöht. Da die Phosphatrücklösung beim erfindungsgemässen Verfahren relativ rasch und ungestört vonstatten geht, ergibt sich nicht nur eine hohe Betriebssicherheit, sondern es ist auch möglich, die anaerobe Zwischenstufe relativ klein zu dimensionieren.

Wegen der Belüftung im Belebungsbecken der zweiten Stufe, weist sowohl das aus dem Belebungsbecken fliessende Abwasser als auch das im Nachklärbecken enthaltende Abwasser einen relativ hohen Sauerstoffgehalt auf. Es wäre daher zu erwarten, dass eine Stufe, welcher Abwasser mit einem Sauerstoffgehalt zugeführt wird, nicht anoxisch betrieben werden kann. Versuche haben jedoch gezeigt, dass bei einem Rückfluss von Abwasser, welcher bis zu viermal grösser sein kann als der Zufluss von Rohabwasser zur ersten Stufe, die anoxische Vorstufe der zweiten Stufe dennoch gut funktioniert. Der durch diesen Rückfluss zugeführte gelöste Sauerstoff wird nämlich unmittelbar gezehrt. Dank der Schlammrückführung aus dem Nachklärbecken, befindet sich in der anoxischen Vorstufe eine grosse Schlammkonzentration, welche sauerstoffzehrende Bakterien enthält, und das aus der ersten Stufe zugeführte teilgereinigte Abwasser liefert die für das Wachstum dieser sauerstoffzehrenden Bakterien nötigen organischen Stoffe. Es herrschen somit in der anoxischen Vorstufe tatsächlich Zustände, welche die fakultativ aeroben denitrifizierenden Bakterien begünstigen. Infolgedessen werden in der anoxischen Vorstufe die Nitrate auf sehr effiziente Weise abgebaut. Die Denitrifikation findet also nicht mehr im Zwischenklärbecken und im Nachklärbecken statt, sondern ausschliesslich in der anoxischen Stufe. Eine Abwasserreinigungsanlage, welche mit dem erfindungsgemässen Verfahren arbeitet, kann deshalb auch kleiner dimensioniert werden, als eine Anlage, welche mit einem der eingangs beschriebenen Verfahren arbeitet. Von besonderer Bedeutung ist schliesslich, dass das Abwasser weitgehend frei von Ammoniumsalzen, Nitraten und Phosphaten ist. Da dies bereits nach der anoxischen Vorstufe der Fall ist, erfolgt im Nachklärbecken auch keine Bildung von Schwimmschlamm. Bei der Einleitung des Abwassers in ein Gewässer sind ferner auch keine negative Auswirkungen auf den Fischbestand und auf den Sauerstoffhaushalt zu befürchten. Die gefürchtete Eutrophierung bleibt aus.

Eine Ausführungsform des Verfahrens sieht vor, dass die Rückleitung von Abwasser zur anoxischen Vorstufe vom Ausgang des Belebungsbeckens der zweiten Stufe erfolgt. Dies hat den Vorteil, dass das Nachklärbecken nicht entsprechend der um die Rückführrate erhöhten hydraulischen Last grösser dimensioniert werden muss.

Vorteilhaft sieht ein Ausführungsbeispiel des Verfahrens vor, dass der Rückführstrom von Abwasser und Schlamm aus der zweiten Stufe in die anoxische Vorstufe das ein bis vierfache des der ersten Stufe zufliessenden Rohabwasserstromes beträgt. Dies hat den Vorteil, dass ein weitgehender Anteil des im Belebungsbecken der zweiten Stufe gebildeten Nitrates in der anoxischen Vorstufe denitrifiziert werden kann. Weiter ermöglicht der Rückführstrom eine hohe Schlammkonzentration in der anoxischen Vorstufe und im Belüftungsbecken der zweiten Stufe aufrechtzuerhalten, so dass dort die Menge der aktiven Biomasse gross ist. Dies wiederum gewährleistet bei der relativ kleinen Dimensionierung dieser Anlageteile eine hohe Abbaurate. Für kommunale oder mehrheitlich kommunale Abwässer kann der Rückführstrom auch bloss das eineinhalbfache bis zweifache des Rohabwasserstromes betragen. So kann Energie für den Betrieb der Umwälzpumpe eingespart werden.

Vorteilhaft wird die Abbauleistung der ersten Stufe durch eine Begrenzung des Sauerstoffangebots so gesteuert, dass im Zulauf zur anoxischen Vorstufe das Verhältnis von BSB5 zu dem im Nitrat enthaltenen Stickstoff grösser als drei ist. Zu diesem Zweck wird die Konzentration an gelöstem Sauerstoff im Belebungsbecken im Durchschnitt tiefer als 1,0 mg/l O₂, vorzugsweise 0,2 - 0,6 mg/l O₂, gehalten und die Schlammkonzentration zwischen 3,0 und 8,0 kg/m³ eingestellt. So wird vermieden, dass in der ersten Stufe zuviel organisches Material abgebaut wird, was zur Folge haben würde, dass nachher zu wenig gut abbaubare Kohlenstoffverbindungen zur Denitrifikation zur Verfügung stehen.

Zweckmässigerweise wird der anaeroben Zwischenstufe biologisch abbaubaren Kohlenstoff enthaltendes Material zugeführt. So kann beispielsweise der anaeroben Zwischenstufe ein Teil des Rohabwassers zugeführt werden. Zum Abbau von eingelagertem Phosphor brauchen die Bakterien einen gewissen Anteil von leicht lösbarem Kohlenstoff, wie er beispielsweise im Rohabwasser vorhanden ist. Es ist aber auch möglich, diesen Kohlenstoff der anaeroben Zwischenstufe in Form von Trübwasser und/oder Brüden zuzuführen, das, bzw. die bei der Eindickung/Entwässerung oder Trocknung von Klärschlamm anfällt.

Zweckmässigerweise wird der Schlamm während ein bis vier Stunden, vorzugsweise etwa zwei Stunden, in der anaeroben Zwischenstufe belassen. Da in die anaerobe Zwischenstufe praktisch kein Nitrat oder Nitrit oder löslicher Sauerstoff eingeführt wird, verläuft die Phosphatrücklösung sehr rasch, so dass im Gegensatz zum Stand der Technik eine relativ kurze Aufenthaltszeit ausreichend ist.

Es ist zweckmässig, das im Trübwasser der Faulstufe enthaltene Phosphat chemisch, z.B. mit Kalziumhydroxid auszufällen. In diesem Bereich wird zur chemischen Ausfällung sehr wenig Fällungsmaterial benötigt. Da die Fällung mit Kalziumhydroxid erfolgen kann, erfolgt auch keine Aufsalzung.

Die Erfindung betrifft auch eine Vorrichtung zur Durchführung des Verfahrens. Diese Vorrichtung besitzt eine erste Stufe, welche ein Belebungsbecken und ein Zwischenklärbecken aufweist, und eine zweite Stufe, welche ein Belebungsbecken und ein Nachklärbecken aufweist, wobei eine Rückführleitung für den Schlamm aus der zweiten Stufe und eine Rückführleitung für Abwasser aus der zweiten Stufe vorgesehen ist. Die erfindungsgemässe Vorrichtung ist dadurch gekennzeichnet, dass eine anaerobe Zwischenstufe zwischen dem Zwischenklärbecken und dem Belebungsbecken vorgesehen ist, um Schlamm aus dem Zwischenklärbecken während einer vorbestimmten Zeit in anaerobem Zustand zu halten und dann in das Belebungsbecken rückzuführen, dass zwischen der ersten Stufe und der zweiten Stufe eine anoxische Vorstufe angeordnet ist, und dass sowohl die Rückführleitung für Abwasser aus der zweiten Stufe als auch die Rückführleitung für Schlamm aus der zweiten Stufe zur anoxischen Vorstufe führt. Diese Vorrichtung ermöglicht eine einfache Durchführung des erfindungsgemässen Verfahrens.

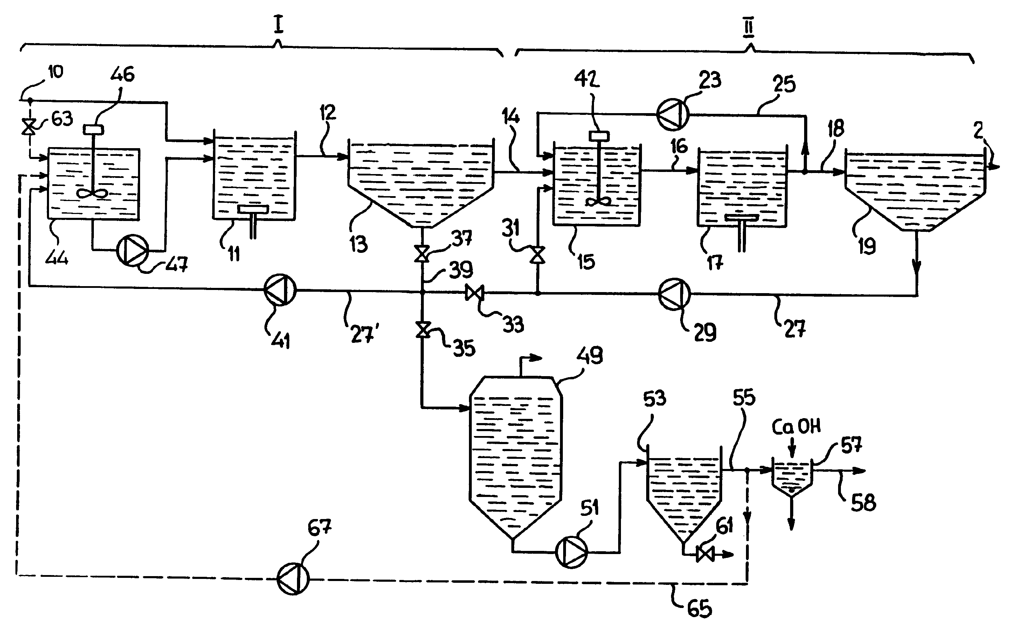

Ein Ausführungsbeispiel der Erfindung wird nun unter Bezugnahme auf die Zeichnung beschrieben.

Die Zeichnung zeigt eine Abwasserreinigungsanlage mit einer ersten Stufe I und einer zweiten Stufe II.

Die Rohabwasserleitung 10 führt zum Belebungsbecken 11. Hier findet ein BSB5-Abbau von etwa 70 bis 85 % statt. Das Belebungsbecken 11 ist über die Leitung 12 mit dem Zwischenklärbecken 13 verbunden, wo eine Sedimentation des Schlammes stattfindet. Vom Zwischenklärbecken 13 führt die Leitung 14 zur anoxischen Vorstufe 15. Mit dem Bezugszeichen 42 ist eine Umwälzvorrichtung, z.B. ein Rührwerk, für die anoxische Vorstufe 15 bezeichnet. Die anoxische Vorstufe 15 ist über die Leitung 16 mit dem Belebungsbecken 17 verbunden. Hier findet ein BSB5-Abbau von etwa 70 bis 90 % des verbleibenden BSB5-Gehalts statt. Der Gesamtabbau in beiden Stufen beträgt somit etwa 85 bis 98 %. Vom Belebungsbecken 17 führt die Leitung 18 zum Nachklärbecken 19, wo eine Sedimentation des Schlammes stattfindet und von wo geklärtes Abwasser durch die Leitung 20 abfliessen kann. Eine Umwälzpumpe 23 ist vorgesehen, um über die Leitung 25 Abwasser vom Belüftungsbecken 17 der anoxischen Vorstufe 15 zuzuführen. Eine Rückführleitung 27 für Schlamm führt aus dem Nachklärbecken 19 über die Pumpe 29, die Zweigleitung 30 und das Ventil 31 zur anoxischen Vorstufe 15. Die Ventile 33 und 35 sind normalerweise geschlossen. Sie werden jeweils geöffnet, um Ueberschussschlamm aus dem Nachklärbecken 19 abzuziehen.

In der ersten Stufe I führt die Rückführung des Schlamms über das Ventil 37, die Leitungsabschnitte 39 und 27′ und die Pumpe 41 zur anaeroben Zwischenstufe 44. Mit dem Bezugszeichen 46 ist eine Umwälzvorrichtung, z.B. ein Rührwerk für die anaerobe Zwischenstufe bezeichnet. Ueber die Rückführleitung 45 und die Pumpe 47 ist die anaerobe Zwischenstufe 44 mit dem Belebungsbecken 11 verbunden. Ueber das Ventil 35 kann Ueberschussschlamm dem Faulbehälter 49 zugeführt werden. Der Faulschlamm wird über die Pumpe 51 der Eindickvorrichtung 53 zugeführt. Die Leitung 55 führt zu der chemischen Phosphat-Fällungs-Stufe 57. Praktisch phosphatfreies Wasser verlässt die Anlage über die Leitung 58.

Faulschlamm kann über das Ventil 61 abgelassen und gegebenenfalls weiterer Behandlung zugeführt werden.

Bei Mangel von gut abbaubarem Kohlenstoff in der anaeroben Zwischenstufe 44 kann dieser ein Teilstrom von Rohabwasser über die Leitung 10′ und das Ventil 63 zugeführt werden. Statt oder zusätzlich zu einer Rohabwasserzufuhr kann aber auch über die Leitung 65 und die Pumpe 67 Trübwasser der anaeroben Zwischenstufe 44 zugeführt werden.

Im Betrieb der Reinigungsanlage fliesst Rohabwasser über die Leitung 10 in das Belebungsbecken 11, wird dort zusammen mit Schlamm aus der anaeroben Zwischenstufe 44 belüftet. Von Bedeutung ist, dass die Abbauleistung der ersten Stufe I durch eine Begrenzung des Sauerstoffangebots und eine Kontrolle der Biomassekonzentration so gesteuert wird, dass die Konzentration an gelöstem Sauerstoff im Belebungsbecken 11 im Durchschnitt tiefer als 1,0 mg/l O₂, vorzugsweise 0,2 - 0,6 mg/l O₂, gehalten und die Schlammkonzentration zwischen 3,0 und 8,0 kg/m³ eingestellt wird. Das Abwasser fliesst dann zusammen mit Schlammflocken in das Zwischenklärbecken 13. Nach dieser Vorklärung fliesst das Abwasser vom Zwischenklärbecken 13 über die Leitung 14 in die anoxische Vorstufe 15. Ueber die Rückführleitung 25 wird dieser Stufe ebenfalls Abwasser, das auch Schlammflocken enthält, aus dem Belebungsbecken 17 der zweiten Stufe zugeführt, und über die Leitungen 27 und 31 pumpt die Pumpe 29 auch Klärschlamm in die anoxische Vorstufe 15. Mittels der Rührvorrichtung 42 werden in der anoxischen Vorstufe 15 diese drei Komponenten vermischt. Dank der grossen Schlammkonzentration sind viele sauerstoffzehrende Bakterien vorhanden. Das aus der ersten Stufe zugeführte Abwasser liefert die organischen Stoffe, die das Wachstum dieser Bakterien fördern. Dank dem Sauerstoffmangel erfolgt ein Reduktionsvorgang durch fakultativ aerobe Bakterien, wobei Nitrite und Nitrate zu elementarem Stickstoff reduziert werden. Von der anoxischen Vorstufe 15 fliesst denitrifiziertes Abwasser über die Leitung 16 zum Belebungsbecken 17 der zweiten Stufe, wird dort belüftet und fliesst dann über die Leitung 18 zu einem Teil in das Nachklärbecken 19 und zum anderen Teil über die Rückführleitung 25 zurück zur anoxischen Vorstufe 15. Im Nachklärbecken 19 setzen sich die Schlammflokken. Weil das über die Leitung 18 in das Nachklärbecken 19 fliessende Abwasser nitratarm ist, findet dort keine Schwimmschlammbildung statt. Gereinigtes Abwasser verlässt die Anlage über die Leitung 20.

Von Zeit zu Zeit wird Schlamm aus dem Zwischenklärbecken 13 in die anaerobe Zwischenstufe 44 gepumpt und dort mit Rohabwasser und/oder Trübwasser vermengt. Nach einer Verweilzeit von ein bis vier Stunden, vorzugsweise zwei Stunden, gelangt dann der Schlamm über die Leitung 45 und die Pumpe 47 in das Belebungsbecken 11. Es findet also ein Kreislauf von Schlamm aus dem Zwischenklärbecken 13 zur anaeroben Zwischenstufe 44, von dort zum Belebungsbecken 11 und wieder zurück zum Zwischenklärbecken statt. Dadurch erfolgt ein ständiger Wechsel von anaeroben und aeroben Milieuverhältnissen. Unter den anaeroben Bedingungen in der anaeroben Zwischenstufe geben die im Schlamm enthaltenen Bakterien Phosphat ab, um dann in der nachfolgenden aeroben Phase erhöhte Phosphatmengen zu speichern. Der über das Ventil 35 aus dem Zwischenklärbecken 13 in den Faulbehälter 49 abgelassene Ueberschussschlamm enthält daher viel dem Abwasser entzogener Phosphor. Dies ist von besonderem Vorteil, wenn der in der Faulstufe anfallende Faulschlamm als Dünger verwendet wird.

In üblicher Weise kann der Ueberschussschlamm im Faulbehälter 49 einer Faulung unterzogen und nachher in einer Eindickvorrichtung 53 entwässert werden. Ein Teil des Trübwassers kann über die Leitung 65 der anaeroben Zwischenstufe 44 zugeführt werden. Ein anderer Teil des Trübwassers wird über die Leitung 55 der chemischen Phosphat-Fällungsstufe 57 zugeführt, wo die Phosphorelimination mit Kalk erfolgen kann. Im Gegensatz zur chemischen Fällung im Abwasserstrom ist hier der Bedarf an Fällungsmittel äusserst gering. Bei der Verwendung von Kalk wird auch eine Aufsalzung vermieden.

Es bleibt noch nachzutragen, dass der aus der zweiten Stufe über die Leitungen 25 und 27 in die anoxische Vorstufe 15 fliessende Rückführstrom etwa ein bis viermal grösser ist als der über die Leitung 10 fliessende Rohabwasserstrom. Die Abbauleistung der ersten Stufe wird so gesteuert, dass das Verhältnis von BSB5 zu dem im Nitrat enthaltenen Stickstoff im Zulauf zur anoxischen Vorstufe 15 grösser als drei ist. Es wird also vermieden, dass in der ersten Stufe zuviel organisches Material abgebaut wird. Dadurch wird gewährleistet, dass später immer genügend viel Material mit gut abbaubaren Kohlenstoffverbindungen zur Förderung der biologischen Denitrifikation zur Verfügung stehen.

Zusammenfassend kann festgestellt werden, dass beim neuen Verfahren die sich bildenden unterschiedlichen Lebensgemeinschaften von Bakterien in den einzelnen Anlageteilen für die Reinigungswirkung günstige Bedingungen antreffen. Die so gebildeten Lebensgemeinschaften passen sich der jeweiligen Abwasserbeschaffenheit gut an und sind auch gegen Belastungsschwankungen sehr resistent. Sie ermöglichen einen verhältnismässig raschen biologischen Abbau der Schadstoffe mit einer relativ klein dimensionierten Abwasserreinigungsanlage.

## Patentansprüche

1. Verfahren zur Nitrat- und Phosphatelimination bei der biologischen Reinigung von Abwasser in einer Abwasserreinigungsanlage mit einer ersten Stufe, welche ein Belebungsbecken (11) und ein Zwischenklärbecken (13) aufweist, und einer zweiten Stufe, welche ein Belebungsbecken (17) und ein Nachklärbecken (19) aufweist, bei welchem Verfahren Abwasser aus der ersten Stufe einer Nachbehandlung in der zweiten Stufe unterzogen wird, der im Nachklärbecken (19) abgesetzte Schlamm zu einem grossen Teil zurückgeleitet und zu einem kleinen Teil als Ueberschussschlamm einer Faulstufe (49) zugeführt wird, dadurch gekennzeichnet, dass in der ersten Stufe Rohabwasser in das Belebungsbecken (11) eingeleitet wird und Belebtschlamm aus dem Zwischenklärbecken (13) einer anaeroben Zwischenstufe (44) zugeführt, dort während einer vorbestimmten Zeit belassen und dann zum Belebungsbecken (11) rezirkuliert wird, dass sowohl Abwasser als auch Schlamm aus der zweiten Stufe einer am Eingang der zweiten Stufe angeordneten anoxischen Vorstufe (15) zugeleitet werden, und dass das mit Schlamm vermengte Abwasser aus der anoxischen Vorstufe (15) dem Belebungsbecken (17) der zweiten Stufe zugeführt wird.

2. Verfahren nach Anspruch 1, dadurch gekennzeichnet, dass die Rückleitung von Abwasser zur anoxischen Vorstufe (15) vom Ausgang des Belebungsbeckens (17) der zweiten Stufe erfolgt.

3. Verfahren nach Anspruch 1 oder 2, dadurch gekennzeichnet, dass der Rückführstrom von Abwasser und Schlamm aus der zweiten Stufe in die anoxische Vorstufe (15) das ein bis vierfache des der ersten Stufe zufliessenden Rohabwasserstromes beträgt.

4. Verfahren nach Anspruch 3, dadurch gekennzeichnet, dass für kommunale oder mehrheitlich kommunale Abwasser der Rückführstrom das eineinhalb bis zweifache des Rohabwasserstromes beträgt.

5. Verfahren nach einem der Ansprüche 1 bis 4, dadurch gekennzeichnet, dass die Abbauleistung der ersten Stufe so gesteuert wird, dass im Zulauf zur anoxischen Vorstufe das Verhältnis von BSB5 zu dem im Nitrat enthaltenen Stickstoff grösser als drei ist.

6. Verfahren nach einem der Ansprüche 1 bis 5, dadurch gekennzeichnet, dass die Konzentration an gelöstem Sauerstoff im Belebungsbecken (11) der ersten Stufe im Durchschnitt tiefer als 1,0 Milligramm pro Liter, vorzugsweise 0,2 bis 0,6 Milligramm pro Liter, gehalten und die Schlammkonzentration zwischen 3,0 und 8,0 Kilogramm pro Kubikmeter eingestellt wird.

7. Verfahren nach einem der Ansprüche 1 bis 6, dadurch gekennzeichnet, dass der anaeroben Zwischenstufe (44) biologisch abbaubaren Kohlenstoff enthaltendes Material zugeführt wird.

8. Verfahren nach Anspruch 7, dadurch gekennzeichnet, dass der anaeroben Zwischenstufe (44) ein Teil des Rohabwassers zugeführt wird.

9. Verfahren nach Anspruch 7 oder 8, dadurch gekennzeichnet, dass der anaeroben Zwischenstufe (44) Trübwasser und/oder Brüden zugeführt wird, das bzw. die bei Eindickung/Entwässerung oder Trocknung von Faulschlamm anfällt.

10. Verfahren nach einem der Ansprüche 1 bis 9, dadurch gekennzeichnet, dass der Schlamm während ein bis vier Stunden, vorzugsweise etwa zwei Stunden, in der anaeroben Zwischenstufe (44) belassen wird.

11. Verfahren nach einer der Ansprüche 1 bis 10, dadurch gekennzeichnet, dass der Inhalt der anaeroben Zwischenstufe (44) und/oder der Inhalt der anoxischen Vorstufe (15) umgewälzt wird.

12. Verfahren nach einem der Ansprüche 1 bis 11, dadurch gekennzeichnet, dass das im Trübwasser der Faulstufe (49) enthaltene Phosphat chemisch, z.B. mit Kalziumhydroxid, ausgefällt wird.

13. Vorrichtung zur Durchführung des Verfahrens nach einem der Ansprüche 1 bis 12, mit einer ersten Stufe, welche ein Belebungsbecken (11) und Zwischenklärbecken (13) aufweist und einer zweiten Stufe, welche ein Belebungsbecken (17) und ein Nachklärbecken (19) aufweist, mit einer Rückführleitung (27) für den Schlamm aus der zweiten Stufe und einer Rückführleitung (25) für Abwasser aus der zweiten Stufe, dadurch gekennzeichnet, dass eine anaerobe Zwischenstufe (44) zwischen dem Zwischenklärbecken (13) und dem Belebungsbecken vorgesehen ist, um Schlamm aus dem Zwischenklärbecken (13) während einer vorbestimmten Zeit in anaeroben Zustand zu halten und dann in das Belebungsbecken (11) zurückzuführen, dass zwischen der ersten Stufe und der zweiten Stufe eine anoxische Vorstufe (15) angeordnet ist, und dass sowohl die Rückführleitung (25) für Abwasser aus der zweiten Stufe als auch die Rückführleitung (27) für Schlamm aus der zweiten Stufe zur anoxischen Vorstufe (15) führt.

14. Vorrichtung nach Anspruch 13, dadurch gekennzeichnet, dass die Rückführleitung (25) für Abwasser vom Ausgang des Belebungsbeckens der zweiten Stufe zur anoxischen Vorstufe (15) führt.

15. Vorrichtung nach Anspruch 13 oder 14, dadurch gekennzeichnet, dass eine Rückführleitung (27) für den Schlamm aus dem Nachklärbecken (19) zum Belebungsbecken (11) der ersten Stufe führt.

16. Vorrichtung nach einem der Ansprüche 13 bis 15, dadurch gekennzeichnet, dass die anoxische Vorstufe (15) mit einer Umwälzvorrichtung (42) versehen ist.

17. Vorrichtung nach einem der Ansprüche 13 bis 16, dadurch gekennzeichnet, dass eine Leitung (10′) zur Versorgung der anaeroben Zwischenstufe (44) mit Rohabwasser vorgesehen ist.

18. Vorrichtung nach einem der Ansprüche 13 bis 17, mit einer Faulstufe (49) und einer der Faulstufe nachgeschalteten Entwässerungsstufe (53), dadurch gekennzeichnet, dass eine Leitung (65) für Trübwasser oder Brüden von der Entwässerungsstufe (53) zur anaeroben Zwischenstufe (44) vorgesehen ist.

## Claims

1. Method for the removal of nitrate and phosphate during the biological purification of wastewater in a wastewater treatment plant comprising a first stage having a biological activation tank (11) and an intermediate clarifying tank (13), and a second stage having a biological activation tank (17) and a secondary clarifying tank (19), said method comprising secondary treatment of wastewater from the first stage in the second stage, recycling a substantial portion of the sludge settled in the secondary clarifying tank (19) and feeding a small portion of said sludge to a putrefaction stage as excess sludge, characterized in that in the first stage raw wastewater is introduced into the biological activation tank (11) and activated sludge from the intermediate clarifying tank (13) is delivered to an anaerobic intermediate stage (44), that the sludge is left therein for a predetermined period and then recycled to the biological activation tank (11), that wastewater as well as sludge from the second stage are fed to an anoxic pre-stage (15) located at the inlet to the second stage, and that wastewater being mixed with sludge from the anoxic pre-stage (15) is fed to the biological activation tank (17) of the second stage.

2. Method according to claim 1, characterized in that recycling of wastewater to the anoxic pre-stage (15) takes place from the outlet of the biological activation tank (17) of the second stage.

3. Method according to claim 1 or 2, characterized in that the recycling stream of wastewater and sludge from the second stage into the anoxic pre-stage (15) is between one to four times larger than the stream of raw wastewater flowing to the first stage.

4. Method according to claim 3, characterized in that for communal wastewater or mainly communal wastewater the recycling stream is between one and a half to two and a half times larger than the stream of raw wastewater.

5. Method according to one of the claims 1 or 4, characterized in that the digestion performance of the first stage is regulated in such a manner that in the influent stream to the anoxic pre-stage the ratio of BSB5 to the nitrogen contained in the nitrate is larger than three.

6. Method according to one of the claims 1 or 5, characterized in that the concentration of oxygen dissolved in the activation tank (11) of the first stage is maintained, on the average, smaller than 1.0 milligram per liter, preferably between 0.2 and 0.6 milligram per liter, and the sludge concentration is regulated between 3.0 and 8.0 kilogram per cubic meter.

7. Method according to one of the claims 1 or 6, characterized in that material comprising carbon being biologically digestable is fed to the anaerobic intermediate stage (44).

8. Method according to claim 7, characterized in that a part of the raw wastewater is fed to the anaerobic intermediate stage (44).

9. Method according to claim 7 or 8, characterized in that excess water which is released on concentrating/dehydrating or drying of putrefacted sludge is fed to the anaerobic intermediate stage (44).

10. Method according to one of the claims 1 or 9, characterized in that the sludge is kept in the anaerobic intermediate stage (44) for one to four hours, preferably approximately two hours.

11. Method according to one of the claims 1 or 10, characterized in that the content of the anaerobic intermediate stage (44) and/or the content of the anoxic pre-stage (15) is stirred or circulated.

12. Method according to one of the claims 1 or 4, characterized in that the phosphate contained in the excess water of the putrefaction stage (49) is precipitated chemically, e.g. with calcium hydroxide.

13. Device for performing the method according to one of the claims 1 to 12, comprising a first stage having a biological activation tank (11) and an intermediate clarifying tank (13), and a second stage having a biological activation tank (17) and a secondary clarifying tank (19), a recycling line (27) for the sludge of the second stage and a recycling line (25) for the wastewater from the second stage, characterized in that an anaerobic intermediate stage (44) is provided between the intermediate clarifying tank (13) and the biological activation tank, in order to leave therein the sludge from the clarifying tank (13) in an anaerobic state for a predetermined period and to recycle the same thereafter to the biological activation tank (11), that an anoxic pre-stage (15) is located between the first and the second stage, and that the recycling line (25) for wastewater from the second stage as well as the recycling line (27) for sludge from the second stage are leading to the anoxic pre-stage (15).

14. Device according to claim 13, characterized in that the recycling line (25) for wastewater leads from the outlet of the biological activation tank of the second stage to the anoxic pre-stage (15).

15. Device according to claim 13 or 14, characterized in that the recycling line (27) for the sludge leads from the secondary clarifying tank (19) to the biological activation tank (11) of the first stage.

16. Device according to one of the claims 13 to 15, characterized in that the anoxic pre-stage (15) is provided with a stirring or circulation device.

17. Device according to one of the claims 13 to 16, characterized in that a pipe (10′) is provided for the introduction of raw wastewater to the anaerobic intermediate stage (44)

18. Device according to one of the claims 13 to 17 having a putrefaction stage (49) and a dehydration stage (53) after the dehydration stage (53), characterized in that a pipe (53) for excess water from the dehydration stage (53) leads to the anaerobic intermediate stage (44).

## Revendications

1. Procédé pour l'élimination des nitrates et des phosphates lors de l'épuration biologique des eaux usées dans une installation d'épuration d'eaux usées comprenant un premier étage qui présente un bassin de traitement par boues activées (11) et un bassin de clarification intermédiaire (13), et un second étage qui présente un bassin de traitement par boues activées (17) et un bassin de clarification finale (19), procédé dans lequel les eaux usées issues du premier étage sont soumises à un traitement ultérieur dans le second étage, les boues déposées dans le bassin de clarification finale (19) sont recyclées pour une grande part et, pour une petite part, sont envoyées dans un étage de putréfaction (49) en tant que boues excédentaires, caractérisé en ce que, dans le premier étage, les eaux usées brutes sont introduites dans le bassin de traitement par boues activées (11) et les boues activées issues du bassin de clarification intermédiaire (13) sont envoyées dans un étage intermédiaire anaérobie (44), y sont abandonnées pendant une période prédéterminée, puis sont recyclées au bassin de traitement par boues activées (11), en ce que des eaux usées et des boues issues du second étage sont envoyées en même temps dans un étage préliminaire anoxique (15) disposé à l'entrée du second étage, et en ce que les eaux usées mélangées de boues, issues de l'étage préliminaire anoxique (15), sont envoyées dans le bassin de traitement par boues activées (17) du second étage.

2. Procédé selon la revendication 1, caractérisé en ce que le retour d'eaux usées vers l'étage préliminaire anoxique (15) s'effectue à partir de la sortie du bassin de traitement par boues activées (17) du second étage.

3. Procédé selon la revendication 1 ou 2, caractérisé en ce que le débit de retour d'eaux usées et de boues à partir du second étage dans l'étage préliminaire anoxique (15) s'élève à 1-4 fois le débit des eaux usées brutes qui arrivent dans le premier étage.

4. Procédé selon la revendication 3, caractérisé en ce que, dans le cas d'eaux usées communales ou multicommunales, le débit de retour s'élève à 1,5-2 fois le débit des eaux usées brutes.

5. Procédé selon l'une quelconque des revendications 1 à 4, caractérisé en ce que la capacité de dégradation du premier étage est réglée de sorte que, dans le courant d'entrée dans l'étage préliminaire anoxique, le rapport de la DBO5 (demande biochimique en oxygène en 5 jours) à l'azote contenu sous forme nitrate soit supérieur à 3.

6. Procédé selon l'une quelconque des revendications 1 à 5, caractérisé en ce que la concentration en oxygène dissous dans le bassin de traitement par boues activées (11) du premier étage est maintenue inférieure en moyenne à 1,0 mg/l, de préférence à 0,2-0,6 mg/l, et la concentration en boues est réglée entre 3,0 et 8,0 kg/m³.

7. Procédé selon l'une quelconque des revendications 1 à 6, caractérisé en ce qu'une matière contenant du carbone, dégradable biologiquement, est introduite dans l'étage intermédiaire anaérobie (44).

8. Procédé selon la revendication 7, caractérisé en ce qu'une partie des eaux usées brutes est introduite dans l'étage intermédiaire anaérobie (44).

9. Procédé selon la revendication 7 ou 8, caractérisé en ce qu'il est introduit, dans l'étage intermédiaire anaérobie (44), des eaux troubles et/ou des vapeurs chaudes qui sont formées au cours de l'épaississement/déshydratation ou du séchage de boues putréfiées.

10. Procédé selon l'une quelconque des revendications 1 à 9, caractérisé en ce que les boues sont abandonnées dans l'étage intermédiaire anaérobie (44) pendant 1 à 4 h, de préférence pendant 2 h environ.

11. Procédé selon l'une quelconque des revendications 1 à 10, caractérisé en ce que le contenu de l'étage intermédiaire anaérobie (44) et/ou le contenu de l'étage préliminaire anoxique (15) sont mis en circulation.

12. Procédé selon l'une quelconque des revendications 1 à 11, caractérisé en ce que le phosphate contenu dans les eaux troubles de l'étage de putréfaction (49) est précipité chimiquement, par exemple avec de l'hydroxyde de calcium.

13. Dispositif pour l'exécution du procédé selon l'une quelconque des revendications 1 à 12, comprenant un premier étage qui présente un bassin de traitement par boues activées (11) et un bassin de clarification intermédiaire (13), et un second étage qui présente un bassin de traitement par boues activées (17) et un bassin de clarification finale (19), avec une conduite de retour (27) pour les boues à partir du second étage et une conduite de retour (25) pour les eaux usées à partir du second étage, caractérisé en ce qu'un étage intermédiaire anaérobie (44) est prévu entre le bassin de clarification intermédiaire (13) et le bassin de traitement par boues activées (11), afin de retenir des boues issues du bassin de clarification intermédiaire (13) pendant une période prédéterminée à l'état anaérobie, puis de les renvoyer dans le bassin de traitement par boues activées (11), en ce qu'un étage préliminaire anoxique (15) est disposé entre le premier étage et le second étage, et en ce que la conduite de retour (25) pour les eaux usées à partir du second étage et la conduite de retour (27) pour les boues à partir du second étage aboutissent l'une et l'autre dans l'étage préliminaire anoxique (15).

14. Dispositif selon la revendication 13, caractérisé en ce que la conduite de retour (25) pour les eaux usées va de la sortie du bassin de traitement par boues activées du second étage à l'étage préliminaire anoxique (15).

15. Dispositif selon la revendication 13 ou 14, caractérisé en ce qu'une conduite de retour (27) pour les boues à partir du bassin de clarification finale (19) aboutit dans le bassin de traitement par boues activées (11) du premier étage.

16. Dispositif selon l'une quelconque des revendications 13 à 15, caractérisé en ce que l'étage préliminaire anoxique (15) est équipé d'un dispositif de mise en circulation (42).

17. Dispositif selon l'une quelconque des revendications 13 à 16, caractérisé en ce qu'une conduite (10′) est prévue pour l'alimentation de l'étage intermédiaire anaérobie (44) en eaux usées brutes.

18. Dispositif selon l'une quelconque des revendications 13 à 17, comprenant un étage de putréfaction (49) et un étage de déshydratation (53) disposé à la suite de l'étage de putréfaction, caractérisé en ce qu'une conduite (65) pour les eaux troubles ou les vapeurs chaudes est prévue entre l'étage de déshydratation (53) et l'étage intermédiaire anaérobie (44).
